# EUROPEAN PATENT APPLICATION

(11) **EP 4 696 924 A1**
(43) Date of publication of application: **18.02.2026**
(21) Application number: 24789010.6
(22) Date of filing: 09.04.2024
(51) Int. Cl.: F17C 13/00, F17C 3/02, F17C 3/08

(54) **CRYOGENIC FLUID STORAGE TANK**

(30) Priority: 11.04.2023 KR 20230047209
(71) Applicant: Iljin Hysolus Co., Ltd., Jeonbuk-do 55322 (KR)
(72) Inventor: LEE, Hee Ju, Wanju-gun Jeonbuk-do 55322 (KR); KIM, In Hwan, Wanju-gun Jeonbuk-do 55322 (KR)
(74) Representative: Zacco Sweden AB
(86) International application number: PCT/KR2024/004750
(87) International publication number: WO 2024/215068

(57) **Abstract**

A cryogenic fluid storage tank according to the present invention comprises: a tank body part; an injection pipe part through which a cryogenic fluid is injected into the tank body part and which is formed by a double-walled pipe; a discharge pipe part through which the cryogenic fluid in the tank body part is discharged to the outside and which is formed by a double-walled pipe; and a baffle part which is mounted to the inner surface of the tank body part and disperses the cryogenic fluid injected into the tank body part.

## Description

### [Technical Field]

The present invention relates to a cryogenic fluid storage tank, and more particularly, to a cryogenic fluid storage tank having a reduced weight and improved external space utilization that supports the tank by reducing a volume of the storage tank that stores a cryogenic fluid.

### [Background Art]

Cryogenic fluid storage tanks are tanks that store cryogenic fluids such as liquefied hydrogen, liquid nitrogen, liquid oxygen, and liquefied natural gas (LNG). In the cryogenic fluid storage tank, it is required to set lengths of an injection pipe and a discharge pipe long to minimize heat intrusion through a pipe through which a cryogenic material is injected.

In the cryogenic fluid storage tank according to the related art, a fluid injection pipe and a fluid discharge pipe are inserted into a vacuum layer between an outer cylinder and an inner cylinder of the tank at long lengths to increase the lengths of the fluid injection pipe and the fluid discharge pipe.

In this structure, a volume of the tank increases, and it is difficult to form the lengths of the fluid injection pipe and the fluid discharge pipe sufficiently long due to the structure. A plurality of pipes passing through the vacuum layer between the outer cylinder and the inner cylinder of the tank are arranged to increase a volume of the outer cylinder, and thus increase a weight. Therefore, it is required to improve this problem.

The background art of the present invention is disclosed in Korean Registered Patent No. 10-1088464 (registered on November 24, 2011, title of the invention: Insulation structure and cryogenic liquid storage tank having the same).

### [Disclosure]

### [Technical Problem]

The present invention is made to improve the above problems, and the purpose of the present invention is to provide a cryogenic fluid storage tank having a reduced weight and improved external space utilization that supports the tank by reducing a volume of the storage tank that stores a cryogenic fluid.

### [Technical Solution]

A cryogenic fluid storage tank according to the present invention may include a tank body part, an injection pipe part which injects a cryogenic fluid into the tank body part and is formed as a double pipe, a discharge pipe part which discharges the cryogenic fluid inside the tank body part to the outside and is formed as a double pipe, and a baffle part which is mounted on an inner surface of the tank body part and forms turbulence of the cryogenic fluid injected into the tank body part.

The injection pipe part may include an injection pipe body part which is formed in a hollow shape and injects the cryogenic fluid into the tank body part and an injection pipe insulation part surrounding an outer surface of the injection pipe body part.

The injection pipe body part may include a main injection pipe body portion passing through the tank body part, an injection pipe insertion portion which extends from an end portion of the main injection pipe body portion, is formed in a curved shape outside the tank body part, and is inserted into the tank body part, and a supply pipe portion which extends from an end portion of the injection pipe insertion portion, is bent at a set angle inside the tank body part, and injects the cryogenic fluid into the tank body part.

The injection pipe insulation part may be mounted to surround an outer surface of the main injection pipe body portion.

The injection pipe insulation part may have a vacuum therein.

The discharge pipe part may include a discharge pipe body part which is formed in a hollow shape and discharges the cryogenic fluid inside the tank body part to the outside and a discharge pipe insulation part surrounding an outer surface of the discharge pipe body part.

The discharge pipe body part may include a discharge pipe insertion portion which communicates with the tank body part and is formed in a curved shape outside the tank body part and a main discharge pipe body portion which extends from an end portion of the discharge pipe insertion portion, is disposed inside the tank body part, and discharges the cryogenic fluid to the outside of the tank body part.

The discharge pipe insulation part may be mounted to surround an outer surface of the main discharge pipe body portion.

The discharge pipe insulation part may have a vacuum therein.

A plurality of baffle parts may be arranged on the inner surface of the tank body part to be spaced apart from each other at set intervals in a longitudinal direction of the tank body part.

A phase conversion catalyst may be mounted on a surface of the baffle part.

The tank body part may include a tank inner cylinder part having the baffle part mounted on an inner surface thereof and a tank outer cylinder part spaced apart from the tank inner cylinder part and installed to surround the tank inner cylinder part.

A vacuum may be formed between the tank inner cylinder part and the tank outer cylinder part.

### [Advantageous Effects]

According to a cryogenic fluid storage tank of the present invention, an injection pipe part and a discharge pipe part connected from an inside to an outside of a tank body part that stores a cryogenic material can be provided as double pipes, and thus lengths of the injection pipe part and the discharge pipe part can be set as long as possible.

Further, according to the present invention, the injection pipe part and the discharge pipe part can be set as double pipes including vacuums, and thus heat intrusion can be minimized.

Further, according to the present invention, pipes passing through a vacuum layer between a tank outer cylinder part and a tank inner cylinder part can be removed, only a space necessary for insulation can be used, and thus a volume of the tank body part can be minimized.

### [Description of Drawings]

FIG. 1 is a schematic perspective view illustrating a cryogenic fluid storage tank according to an embodiment of the present invention.
FIG. 2 is a schematic front view illustrating the cryogenic fluid storage tank according to the embodiment of the present invention.
FIG. 3 is a schematic front view illustrating a state obtained by rotating FIG. 2 by a first angle.
FIG. 4 is a schematic front view illustrating a state obtained by rotating FIG. 2 by a second angle.
FIG. 5 is a schematic side cross-sectional view illustrating the cryogenic fluid storage tank according to the embodiment of the present invention.

### [Best Mode]

Hereinafter, a cryogenic fluid storage tank according to embodiments of the present invention will be described with reference to the accompanying drawings. In this process, the thicknesses of lines or the sizes of components illustrated in the drawings may be exaggerated for clarity and convenience of description.

Further, terms described below are terms defined in consideration of functions in the present invention and may change according to the intention or custom of a user or an operator. Therefore, definitions of these terms should be made based on the content throughout the specification.

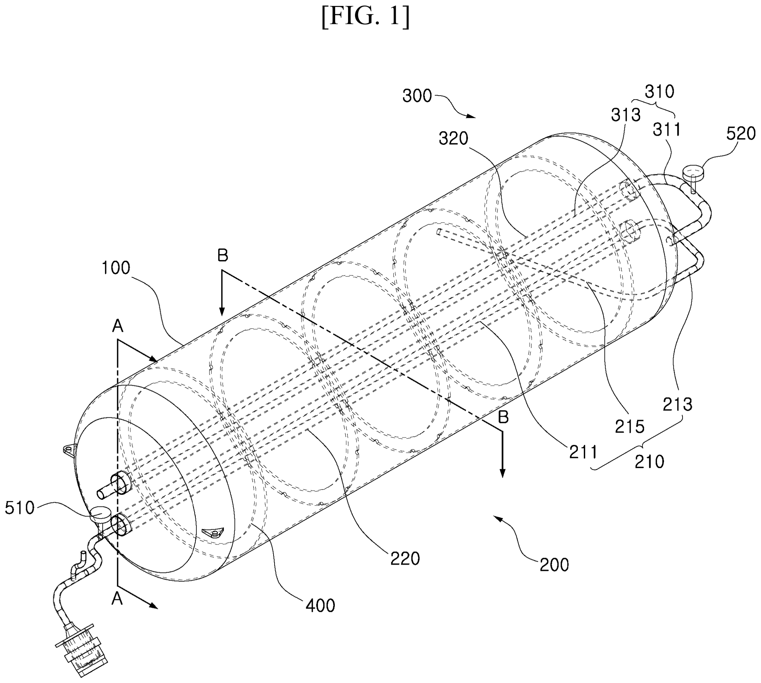

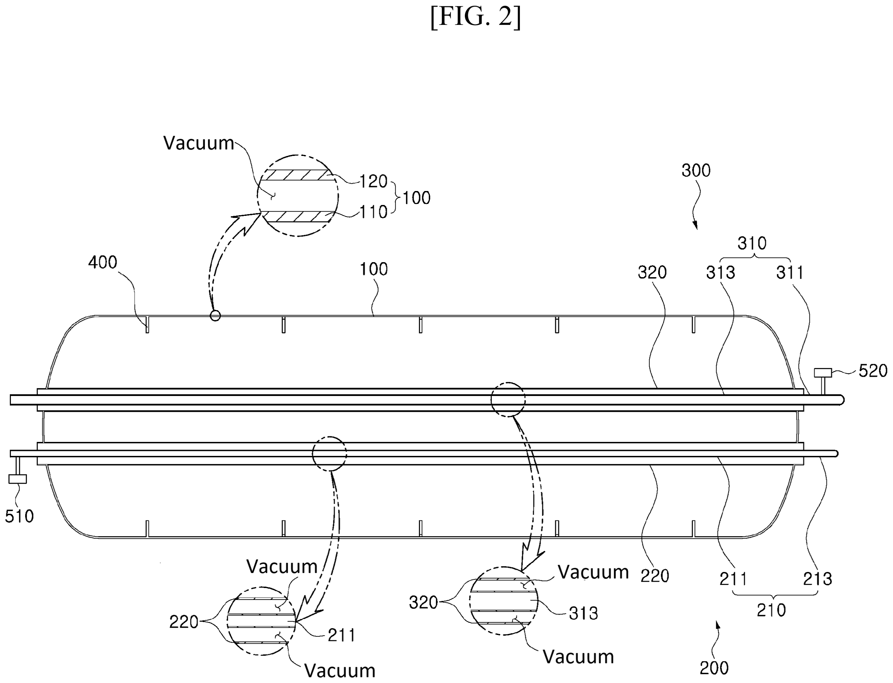

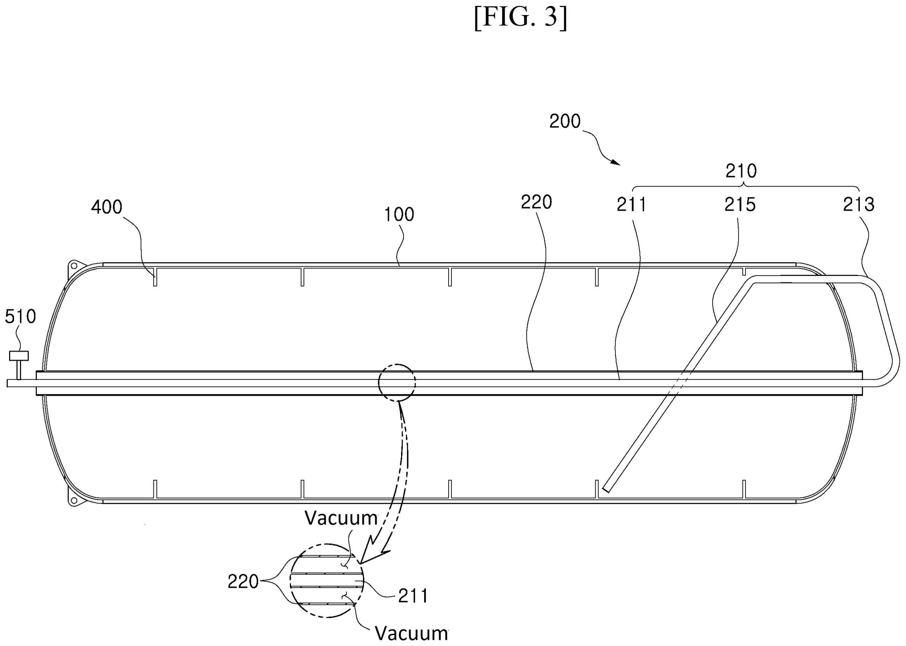

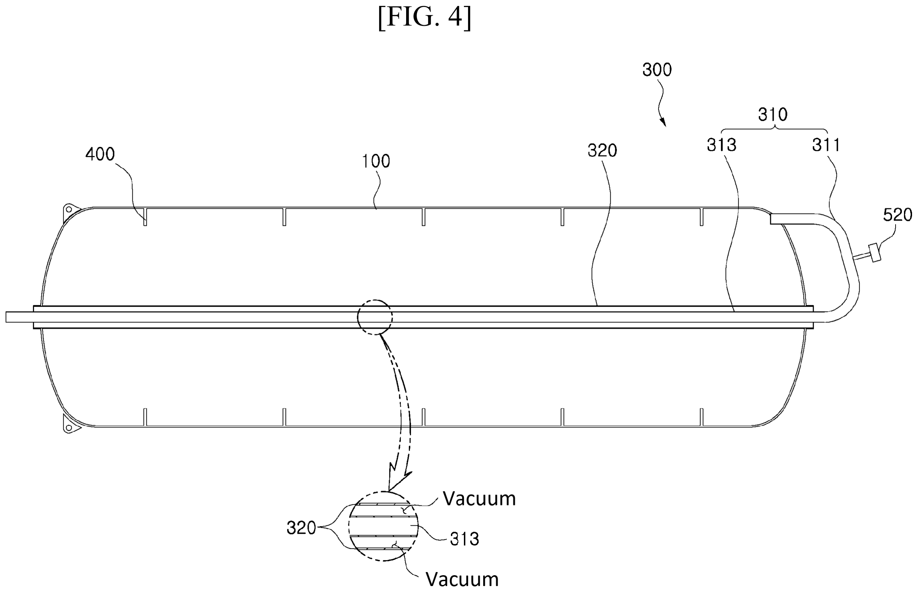

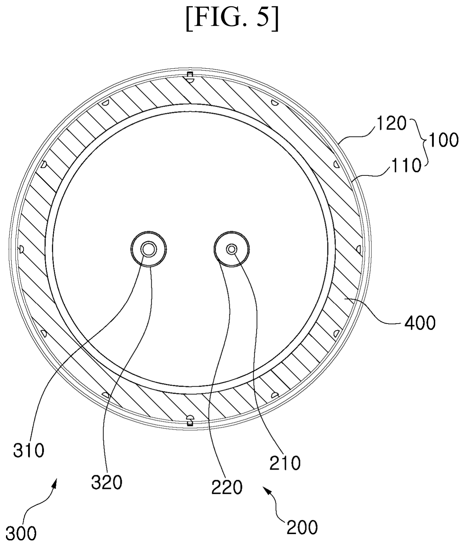

FIG. 1 is a schematic perspective view illustrating a cryogenic fluid storage tank according to an embodiment of the present invention, FIG. 2 is a schematic front view illustrating the cryogenic fluid storage tank according to the embodiment of the present invention, FIG. 3 is a schematic front view illustrating a state obtained by rotating FIG. 2 by a first angle, FIG. 4 is a schematic front view illustrating a state obtained by rotating FIG. 2 by a second angle, and FIG. 5 is a schematic side cross-sectional view illustrating the cryogenic fluid storage tank according to the embodiment of the present invention.

Referring to FIGS. 1 to 5, a cryogenic fluid storage tank according to an embodiment of the present invention is a tank that stores a cryogenic fluid such as liquefied hydrogen, liquid nitrogen, liquid oxygen, and liquefied natural gas (LNG).

The cryogenic fluid storage tank may include a tank body part 100, an injection pipe part 200, a discharge pipe part 300, and a baffle part 400.

The tank body part 100 may be formed in an elliptic shape and may accommodate the cryogenic fluid in an internal space thereof. The cryogenic fluid may include a cryogenic liquid such as liquefied hydrogen, liquid nitrogen, liquid oxygen, and LNG or a cryogenic gas. The tank body part 100 may be set to accommodate a high-pressure cryogenic fluid.

The tank body part 100 may include a tank inner cylinder part 110 and a tank outer cylinder part 120. The tank inner cylinder part 110 may be formed in an elliptic shape and may accommodate the cryogenic fluid in an internal space thereof. A plurality of baffle parts 400 may be mounted on an inner surface of the tank inner cylinder part 110.

The tank outer cylinder part 120 may be spaced apart from the tank inner cylinder part 110 and may be installed to surround the tank inner cylinder part 110. The tank outer cylinder part 120 may be formed in an elliptic shape. The tank inner cylinder part 110 and the tank outer cylinder part 120 may be set to accommodate a high-pressure cryogenic fluid. The injection pipe part 200 and the discharge pipe part 300 may be installed to pass through the tank inner cylinder part 110 and the tank outer cylinder part 120.

A vacuum may be formed between the tank inner cylinder part 110 and the tank outer cylinder part 120. The tank inner cylinder part 110 and the tank outer cylinder part 120 may have a double pipe structure. A vacuum layer formed between the tank inner cylinder part 110 and the tank outer cylinder part 120 may prevent heat from being introduced from the outside or heat from the inside from being discharged. The vacuum may be formed between the tank inner cylinder part 110 and the tank outer cylinder part 120 to prevent heat intrusion or heat loss of the cryogenic fluid accommodated in the tank inner cylinder part 110.

A separate insulation material in addition to the vacuum may be filled in the space between the tank inner cylinder part 110 and the tank outer cylinder part 120 to prevent heat intrusion or heat loss of the cryogenic fluid accommodated in the tank inner cylinder part 110.

Referring to FIGS. 2 and 3, the injection pipe part 200 may inject the cryogenic fluid into the tank body part 100 and may be formed in a double pipe. The injection pipe part 200 may be formed in a double pipe to prevent heat intrusion or heat loss of the cryogenic fluid injected through the injection pipe part 200.

The injection pipe part 200 may include an injection pipe body part 210 and an injection pipe insulation part 220. The injection pipe body part 210 may be formed in a hollow shape and inject the cryogenic fluid into the tank body part 100. A first valve 510 may be mounted on the injection pipe body part 210. As the first valve 510 is opened or closed, the cryogenic fluid may be injected or prevented from being injected into the injection pipe body part 210.

The injection pipe body part 210 may include a main injection pipe body portion 211, an injection pipe insertion portion 213, and a supply pipe portion 215. The main injection pipe body portion 211 may pass through the tank body part 100 and may be formed in a hollow shape. The cryogenic fluid may be injected through the main injection pipe body portion 211. The main injection pipe body portion 211 may be disposed inside the tank inner cylinder part 110 of the tank body part 100.

The first valve 510 may be mounted on one end portion (a left end portion based on FIG. 3) of the main injection pipe body portion 211. As the first valve 510 is opened or closed, the cryogenic fluid may be injected or prevented from being injected into the main injection pipe body portion 211.

The injection pipe insulation part 220 may be mounted on an outer surface of the main injection pipe body portion 211. The injection pipe insulation part 220 may be mounted on the outer surface of the main injection pipe body portion 211 to prevent heat intrusion or heat loss of the cryogenic fluid injected through the main injection pipe body portion 211.

The injection pipe insertion portion 213 may extend from an end portion (a right end portion based on FIG. 3) of the main injection pipe body portion 211, may be formed in a curved shape outside the tank body part 100, and may be inserted into the tank body part 100. The injection pipe insertion portion 213 may be formed to extend in a curved shape from the end portion of the main injection pipe body portion 211 to reduce an installation space of the cryogenic fluid storage tank according to the present invention.

The supply pipe portion 215 may extend from an end portion (an upper end portion based on FIG. 3) of the injection pipe insertion portion 213, may be bent at a set angle θ inside the tank body part 100, and may inject the cryogenic fluid into the tank body part 100.

The supply pipe portion 215 may be bent at the set angle θ inside the tank inner cylinder part 110 of the tank body part 100 at the end portion of the injection pipe insertion portion 213 and may be formed long in the tank inner cylinder part 110. The set angle θ at which the supply pipe portion 215 is bent may be set in consideration of the size of the tank inner cylinder part 110 or the like.

The injection pipe insulation part 220 may surround an outer surface of the injection pipe body part 210. The injection pipe insulation part 220 may be mounted to surround the outer surface of the main injection pipe body portion 211. The injection pipe insulation part 220 may have a vacuum therein. That is, a vacuum layer may be formed between the injection pipe insulation part 220 and the main injection pipe body portion 211 of the injection pipe body part 210.

The vacuum layer formed between the injection pipe insulation part 220 and the main injection pipe body portion 211 of the injection pipe body part 210 may prevent heat from being introduced from the outside or heat from the inside from being discharged. The vacuum may be formed between the injection pipe insulation part 220 and the main injection pipe body portion 211 of the injection pipe body part 210 to prevent heat intrusion or heat loss of the cryogenic fluid injected through the main injection pipe body portion 211.

A separate insulation material in addition to the vacuum may be filled in a space between the injection pipe insulation part 220 and the main injection pipe body portion 211 of the injection pipe body part 210 to prevent heat intrusion or heat loss of the cryogenic fluid flowing through the main injection pipe body portion 211 of the injection pipe body part 210.

Referring to FIGS. 2 and 4, the discharge pipe part 300 may discharge the cryogenic fluid in the tank body part 100 to the outside and may be formed in a double pipe. The discharge pipe part 300 may be formed in a double pipe to prevent heat intrusion or heat loss of the cryogenic fluid flowing through the discharge pipe part 300.

The discharge pipe part 300 may include a discharge pipe body part 310 and a discharge pipe insulation part 320. The discharge pipe body part 310 may be formed in a hollow shape and may discharge the cryogenic fluid in the tank body part 100 to the outside. A second valve 520 may be mounted on the discharge pipe body part 310. As the second valve 520 is opened or closed, the cryogenic fluid may be discharged or prevented from being discharged from the discharge pipe body part 310.

The discharge pipe body part 310 may include a discharge pipe insertion portion 311 and a main discharge pipe body portion 313. The discharge pipe insertion portion 311 may communicate with the tank body part 100 and may be formed in a curved shape outside the tank body part 100. The discharge pipe insertion portion 311 may be formed in a curved shape outside the tank outer cylinder part 120 of the tank body part 100 to reduce an installation space of the cryogenic fluid storage tank according to the present invention.

The second valve 520 may be mounted on the discharge pipe insertion portion 311. As the second valve 520 is opened or closed, the cryogenic fluid may be discharged or prevented from being discharged from the discharge pipe insertion portion 311.

The main discharge pipe body portion 313 may extend from an end portion (a lower end based on FIG. 4) of the discharge pipe insertion portion 311, may be disposed inside the tank body part 100, and may discharge the cryogenic fluid to the outside of the tank body part 100. The main discharge pipe body portion 313 may be disposed to be spaced apart from the main discharge pipe body portion 313 inside the tank inner cylinder part 110 of the tank body part 100.

The discharge pipe insulation part 320 may be mounted on an outer surface of the main discharge pipe body portion 313. The discharge pipe insulation part 320 may be mounted on the outer surface of the main discharge pipe body portion 313 to prevent heat intrusion or heat loss of the cryogenic fluid flowing from the main discharge pipe body portion 313.

The discharge pipe insulation part 320 may surround an outer surface of the discharge pipe body part 310. The discharge pipe insulation part 320 may be mounted to surround the outer surface of the main discharge pipe body portion 313. The discharge pipe insulation part 320 may have a vacuum therein. That is, a vacuum layer may be formed between the discharge pipe insulation part 320 and the main discharge pipe body portion 313 of the discharge pipe body part 310.

The vacuum layer formed between the discharge pipe insulation part 320 and the main discharge pipe body portion 313 of the discharge pipe body part 310 may prevent heat from being introduced from the outside or heat from the inside from being discharged. The vacuum may be formed between the discharge pipe insulation part 320 and the main discharge pipe body portion 313 of the discharge pipe body part 310 to prevent heat intrusion or heat loss of the cryogenic fluid flowing through the main discharge pipe body portion 313.

A separate insulation material in addition to the vacuum may be filled in a space between the discharge pipe insulation part 320 and the main discharge pipe body portion 313 of the discharge pipe body part 310 to prevent heat intrusion or heat loss of the cryogenic fluid flowing through the main discharge pipe body portion 313 of the discharge pipe body part 310.

The baffle part 400 may be mounted on an inner surface of the tank body part 100 and may form a turbulent flow of the cryogenic fluid injected into the tank body part 100. The cryogenic fluid injected into the tank body part 100 may be formed as turbulence while colliding with the plurality of baffle parts 400.

The baffle part 400 may be mounted on the inner surface of the tank inner cylinder part 110 of the tank body part 100. The cryogenic fluid injected into the tank inner cylinder part 110 may be formed as turbulence while colliding with the plurality of baffle parts 400.

The baffle part 400 may fix the injection pipe part 200 and the discharge pipe part 300 while surrounding outer surfaces of the injection pipe part 200 and the discharge pipe part 300. The baffle part 400 may surround and fix the outer surfaces of the injection pipe part 200 and the discharge pipe part 300 to stably maintain a position at which the injection pipe part 200 and the discharge pipe part 300 are mounted on the tank body part 100.

The plurality of baffle parts 400 may be arranged on the inner surface of the tank inner cylinder part 110 of the tank body part 100 to be spaced apart from each other at set intervals in a longitudinal direction (a left-right direction based on FIG. 2) of the tank inner cylinder part 110 of the tank body part 100. The plurality of baffle parts 400 may be arranged in a zigzag shape in the longitudinal direction of the tank inner cylinder part 110 on the inner surface of the tank inner cylinder part 110 of the tank body part 100. The baffle part 400 may be mounted on the inner surface of the tank inner cylinder part 110 of the tank body part 100 to protrude by a preset length.

The plurality of baffle parts 400 may be arranged on the inner surface of the tank inner cylinder part 110 of the tank body part 100 to be spaced apart from each other at set intervals, so that the cryogenic fluid flowing in the internal space of the tank inner cylinder part 110 may collide with the baffle part 400 to promote dispersion.

A phase conversion catalyst may be mounted on a surface of the baffle part 400. The phase conversion catalyst may be mounted on the surface of the baffle part 400, so that phase conversion may be promoted while the cryogenic fluid flowing in the internal space of the tank inner cylinder part 110 collides with the baffle part 400. The phase conversion catalyst may be mounted on the surface of the baffle part 400 by a manner such as adhesion or application.

In the present invention, the phase conversion catalyst may promote conversion (ortho-para conversion (OPC)) of a normal-state cryogenic fluid introduced into the internal space of the tank inner cylinder part 110 from an ortho state to a para state. The phase conversion catalyst may include an iron oxide such as Fe₂O₃.

For example, when the cryogenic fluid is a hydrogen gas, the phase conversion catalyst may liquefy normal hydrogen (standard hydrogen) in equilibrium at room temperature to promote conversion from ortho-hydrogen (o-H₂) to para-hydrogen (p-H₂).

When the phase conversion of the cryogenic fluid is slow, the cryogenic fluid may be evaporated due to conversion heat or the like, resulting in energy loss. Thus, the phase conversion of the cryogenic fluid may be promoted through the phase conversion catalyst mounted on the surface of the baffle part 400, thereby preventing energy loss.

According to the cryogenic fluid storage tank according to the embodiment of the present invention, the injection pipe part 200 and the discharge pipe part 300 connected from an inside to an outside of the tank body part 100 that stores a cryogenic material may be provided as double pipes, and thus lengths of the injection pipe part 200 and the discharge pipe part 300 may be set as long as possible.

Further, according to the present invention, the injection pipe part 200 and the discharge pipe part 300 can be set as double pipes including vacuums, and thus heat intrusion can be minimized.

Further, according to the present invention, pipes passing through the vacuum layer between the tank outer cylinder part 120 and the tank inner cylinder part 110 can be removed, only a space necessary for insulation can be used, and thus a volume of the tank body part 100 can be minimized.

Although the present invention has been described with reference to one embodiment illustrated in the drawings, the description is merely illustrative, and those skilled in the art to which the technology belongs can understand that various modifications and other equivalent embodiments may be made. Thus, the true technical scope of the present invention should be determined according to the appended claims.

## Claims

1. A cryogenic fluid storage tank comprising:
a tank body part;
an injection pipe part which injects a cryogenic fluid into the tank body part and is formed as a double pipe;
a discharge pipe part which discharges the cryogenic fluid inside the tank body part to the outside and is formed as a double pipe; and
a baffle part which is mounted on an inner surface of the tank body part and forms turbulence of the cryogenic fluid injected into the tank body part.

2. The cryogenic fluid storage tank of claim 1, wherein the injection pipe part includes:
an injection pipe body part which is formed in a hollow shape and injects the cryogenic fluid into the tank body part; and
an injection pipe insulation part surrounding an outer surface of the injection pipe body part.

3. The cryogenic fluid storage tank of claim 2, wherein the injection pipe body part includes:
a main injection pipe body portion passing through the tank body part;
an injection pipe insertion portion which extends from an end portion of the main injection pipe body portion, is formed in a curved shape outside the tank body part, and is inserted into the tank body part; and
a supply pipe portion which extends from an end portion of the injection pipe insertion portion, is bent at a set angle inside the tank body part, and injects the cryogenic fluid into the tank body part.

4. The cryogenic fluid storage tank of claim 3, wherein the injection pipe insulation part is mounted to surround an outer surface of the main injection pipe body portion.

5. The cryogenic fluid storage tank of claim 2, wherein the injection pipe insulation part has a vacuum therein.

6. The cryogenic fluid storage tank of claim 1, wherein the discharge pipe part includes:
a discharge pipe body part which is formed in a hollow shape and discharges the cryogenic fluid inside the tank body part to the outside; and
a discharge pipe insulation part surrounding an outer surface of the discharge pipe body part.

7. The cryogenic fluid storage tank of claim 6, wherein the discharge pipe body part includes:
a discharge pipe insertion portion which communicates with the tank body part and is formed in a curved shape outside the tank body part; and
a main discharge pipe body portion which extends from an end portion of the discharge pipe insertion portion, is disposed inside the tank body part, and discharges the cryogenic fluid to the outside of the tank body part.

8. The cryogenic fluid storage tank of claim 7, wherein the discharge pipe insulation part is mounted to surround an outer surface of the main discharge pipe body portion.

9. The cryogenic fluid storage tank of claim 6, wherein the discharge pipe insulation part has a vacuum therein.

10. The cryogenic fluid storage tank of claim 1, wherein a plurality of baffle parts are arranged on the inner surface of the tank body part to be spaced apart from each other at set intervals in a longitudinal direction of the tank body part.

11. The cryogenic fluid storage tank of claim 1, wherein a phase conversion catalyst is mounted on a surface of the baffle part.

12. The cryogenic fluid storage tank of claim 1, wherein the tank body part includes:
a tank inner cylinder part having the baffle part mounted on an inner surface thereof; and
a tank outer cylinder part spaced apart from the tank inner cylinder part and installed to surround the tank inner cylinder part.

13. The cryogenic fluid storage tank of claim 12, wherein a vacuum is formed between the tank inner cylinder part and the tank outer cylinder part.
